# EUROPEAN PATENT APPLICATION

(11) **EP 4 757 307 A1**
(43) Date of publication of application: **10.06.2026**
(21) Application number: 23948565.9
(22) Date of filing: 07.08.2023
(51) Int. Cl.: H04N 9/31, H04N 5/06, B60K 35/00, B60Q 1/02

(54) **PROJECTION DEVICE FOR VEHICLE**

(71) Applicant: LG Electronics Inc., Yeongdeungpo-gu Seoul 07336 (KR)
(72) Inventor: JEONG, Jiyoung, Seoul 06772 (KR); JEOUNG, Byungwoo, Seoul 06772 (KR); JEONG, Dongman, Seoul 06772 (KR); KANG, Hyojin, Seoul 06772 (KR)
(74) Representative: Vossius & Partner Patentanwälte Rechtsanwälte mbB
(86) International application number: PCT/KR2023/011614
(87) International publication number: WO 2025/033570

(57) **Abstract**

A projection device for vehicle is disclosed. The projection device for vehicle of the present disclosure includes: an image generating device configured to output a projection image; an actuator configured to change a direction of propagation of the projection image from the image generating device and output a partially overlapping projection image; and a signal processing device configured to output a compensation image signal for compensating an overlapping area of the projection image by the actuator to the image generating device. Accordingly, it is possible to output a clear projection image while increasing the resolution of the projection image.

## Description

### BACKGROUND

### 1. Technical Field

This disclosure relates to a projection device for vehicle, and more particularly, to a projection device for vehicle capable of outputting a clear projection image while increasing the resolution of the projection image.

### 2. Description of the Related Art

A vehicle is an apparatus that moves in the direction desired by a user riding in it. A representative example is an automobile.

Meanwhile, a projection device for a vehicle is installed inside the vehicle, for the convenience of a user using the vehicle.

For example, there is a trend towards employing a head-up display that projects images onto a windshield, or projecting images onto vehicle's front lamp.

Meanwhile, Korean Patent Publication No. 10-2006-0101026 as a prior document discloses a display device and method for employing a resolution enhancement device that can effectively improve the resolution of a projection display device.

In particular, the prior document discloses a method that uses an input signal application means that applies an input signal to an image displacement driving means to periodically display different images on a screen, and to visually perceive the image as if there were a larger number of pixels, thereby providing improved resolution with the same number of pixels.

However, according to prior document, when driving a movable member of a resolution enhancement device, it is difficult to generate an ideal input signal. Thus, there is a problem in that an image distortion caused by the overshoot and rising time of an input signal occurs.

### SUMMARY

The disclosure has been made in view of the above problems, and provides a projection device for vehicle capable of outputting a clear projection image while increasing the resolution of the projection image.

In accordance with an aspect of the present disclosure, a projection device for vehicle includes: an image generating device configured to output a projection image; an actuator configured to change a direction of propagation of the projection image from the image generating device and output a partially overlapping projection image; and a signal processing device configured to output a compensation image signal for compensating an overlapping area of the projection image by the actuator to the image generating device.

Meanwhile, in accordance with an aspect of the present disclosure, the projection device for vehicle further includes a detector configured to detect an operation of the actuator, and the signal processing device is configured to output, to the image generating device, the compensation image signal for compensating an overlapping area of the projection image by the actuator based on the operation of the actuator.

Meanwhile, the signal processing device is configured to output a reference signal for driving the actuator changed in response to the operation of the actuator.

Meanwhile, in accordance with an aspect of the present disclosure, the projection device for vehicle further includes a detector configured to detect an operation of the actuator, and the signal processing device is configured to calculate a resonant frequency based on the operation of the actuator, and change a reference signal for driving the actuator based on the calculated resonant frequency.

Meanwhile, in accordance with an aspect of the present disclosure, the projection device for vehicle further includes a temperature detector, and the signal processing device is configured to calculate the resonant frequency based on the operation of the actuator and a temperature detected by the temperature detector, and change the reference signal for driving the actuator based on the calculated resonant frequency.

Meanwhile, in accordance with an aspect of the present disclosure, the projection device for vehicle further includes a timer, and the signal processing device is configured to calculate the resonant frequency based on the operation of the actuator and an operating period of the actuator from the timer, and change the reference signal for driving the actuator based on the calculated resonant frequency.

Meanwhile, while sequentially outputting projection images of a plurality of colors based on a vertical synchronization signal, the signal processing device is configured to control the actuator to operate in response to a projection image of any one color among the projection images of a plurality of colors.

Meanwhile, in accordance with an aspect of the present disclosure, the projection device for vehicle further includes a detector configured to detect the operation of the actuator, and, based on the operation of the actuator, the signal processing device is configured to output, to the image generating device, a compensation image signal for compensating an overlapping area of a projection image of any one color by the actuator.

Meanwhile while simultaneously outputting projection images of a plurality of colors based on a vertical synchronization signal, the signal processing device is configured to control the actuator to operate in response to the projection images of a plurality of colors.

Meanwhile, in accordance with an aspect of the present disclosure, the projection device for vehicle further includes a detector configured to detect the operation of the actuator, and, based on the operation of the actuator, the signal processing device is configured to output, to the image generating device, a compensation image signal for compensating an overlapping area of the projection image by the actuator.

Meanwhile, the signal processing device is configured to calculate a compensation luminance value of the first pixel based on a luminance value of a first pixel within the overlapping area of the projection image by the actuator and a luminance value of a second pixel adjacent to the first pixel, and output a compensation image signal based on the compensation luminance value of the first pixel to the image generating device.

Meanwhile, as a movement amount of the actuator increases, while compensating a pixel within the overlapping area of the projection image by the actuator, the signal processing device is configured to increase the number of adjacent pixels, and output a luminance value of increased adjacent pixels and a compensation image signal based on a luminance value of pixel to the image generating device.

Meanwhile, in accordance with another aspect of the present disclosure, a projection device for vehicle includes: an image generating device configured to output a projection image; an actuator configured to change a direction of propagation of the projection image from the image generating device and output a partially overlapping projection image; a detector configured to detect an operation of the actuator; and a signal processing device configured to calculate a resonant frequency based on the operation of the actuator, and change a reference signal for driving the actuator, based on the calculated resonant frequency.

Meanwhile, the signal processing device is configured to output, to the image generating device, a compensation image signal for compensating an overlapping area of the projection image by the actuator based on the operation of the actuator.

### EFFECTS OF THE DISCLOSURE

A vehicle projection according to an embodiment of the present disclosure includes: an image generating device configured to output a projection image; an actuator configured to change a direction of propagation of the projection image from the image generating device and output a partially overlapping projection image; and a signal processing device configured to output a compensation image signal for compensating an overlapping area of the projection image by the actuator to the image generating device. Accordingly, it is possible to output a clear projection image while increasing the resolution of the projection image.

Meanwhile, the vehicle projection device according to an embodiment of the present disclosure further includes a detector configured to detect an operation of the actuator, and the signal processing device is configured to output, to the image generating device, the compensation image signal for compensating an overlapping area of the projection image by the actuator based on the operation of the actuator. Accordingly, it is possible to output a clear projection image while increasing the resolution of the projection image.

Meanwhile, the signal processing device is configured to output a reference signal for driving the actuator changed in response to the operation of the actuator. Accordingly, it is possible to output a clear projection image while increasing the resolution of the projection image.

Meanwhile, the vehicle projection device according to an embodiment of the present disclosure further includes a detector configured to detect an operation of the actuator, and the signal processing device is configured to calculate a resonant frequency based on the operation of the actuator, and change a reference signal for driving the actuator based on the calculated resonant frequency. Accordingly, it is possible to output a clear projection image while increasing the resolution of the projection image.

Meanwhile, the vehicle projection device according to an embodiment of the present disclosure further includes a temperature detector, and the signal processing device is configured to calculate the resonant frequency based on the operation of the actuator and a temperature detected by the temperature detector, and change the reference signal for driving the actuator based on the calculated resonant frequency. Accordingly, it is possible to output a clear projection image while increasing the resolution of the projection image.

Meanwhile, the vehicle projection device according to an embodiment of the present disclosure further includes a timer, and the signal processing device is configured to calculate the resonant frequency based on the operation of the actuator and an operating period of the actuator from the timer, and change the reference signal for driving the actuator based on the calculated resonant frequency. Accordingly, it is possible to output a clear projection image while increasing the resolution of the projection image.

Meanwhile, while sequentially outputting projection images of a plurality of colors based on a vertical synchronization signal, the signal processing device is configured to control the actuator to operate in response to a projection image of any one color among the projection images of a plurality of colors. Accordingly, it is possible to output a clear projection image while increasing the resolution of the projection image.

Meanwhile, the vehicle projection device according to an embodiment of the present disclosure further includes a detector configured to detect the operation of the actuator, and, based on the operation of the actuator, the signal processing device is configured to output, to the image generating device, a compensation image signal for compensating an overlapping area of a projection image of any one color by the actuator. Accordingly, it is possible to output a clear projection image while increasing the resolution of the projection image.

Meanwhile while simultaneously outputting projection images of a plurality of colors based on a vertical synchronization signal, the signal processing device is configured to control the actuator to operate in response to the projection images of a plurality of colors. Accordingly, it is possible to output a clear projection image while increasing the resolution of the projection image.

Meanwhile, the vehicle projection device according to an embodiment of the present disclosure further includes a detector configured to detect the operation of the actuator, and, based on the operation of the actuator, the signal processing device is configured to output, to the image generating device, a compensation image signal for compensating an overlapping area of the projection image by the actuator. Accordingly, it is possible to output a clear projection image while increasing the resolution of the projection image.

Meanwhile, the signal processing device is configured to calculate a compensation luminance value of the first pixel based on a luminance value of a first pixel within the overlapping area of the projection image by the actuator and a luminance value of a second pixel adjacent to the first pixel, and output a compensation image signal based on the compensation luminance value of the first pixel to the image generating device. Accordingly, it is possible to output a clear projection image while increasing the resolution of the projection image.

Meanwhile, as a movement amount of the actuator increases, while compensating a pixel within the overlapping area of the projection image by the actuator, the signal processing device is configured to increase the number of adjacent pixels, and output a luminance value of increased adjacent pixels and a compensation image signal based on a luminance value of pixel to the image generating device. Accordingly, it is possible to output a clear projection image while increasing the resolution of the projection image.

Meanwhile, in accordance with another aspect of the present disclosure, a projection device for vehicle includes: an image generating device configured to output a projection image; an actuator configured to change a direction of propagation of the projection image from the image generating device and output a partially overlapping projection image; a detector configured to detect an operation of the actuator; and a signal processing device configured to calculate a resonant frequency based on the operation of the actuator, and change a reference signal for driving the actuator, based on the calculated resonant frequency. Accordingly, it is possible to output a clear projection image while increasing the resolution of the projection image.

Meanwhile, the signal processing device is configured to output, to the image generating device, a compensation image signal for compensating an overlapping area of the projection image by the actuator based on the operation of the actuator. Accordingly, it is possible to output a clear projection image while increasing the resolution of the projection image.

### BRIEF DESCRIPTION OF THE DRAWINGS

FIG. 1 is a drawing illustrating an example of the exterior and interior of a vehicle;
FIG. 2A is a drawing illustrating an example of the internal configuration of a projection device for vehicle according to an embodiment of the present disclosure;
FIGS. 2B to 3B are drawings illustrating the internal configuration of a projection device for vehicle according to various embodiments of the present disclosure; and
FIGS. 4A to 6B are drawings for explaining FIGS. 2A to 3B.

### DETAILED DESCRIPTION

Hereinafter, the present disclosure will be described in more detail with reference to the drawings.

The suffixes "module" and "part" used for components in the following description are merely intended to facilitate description of the specification, and the suffixes do not have any special meaning or function. Accordingly, the "module" and "part" can be used interchangeably.

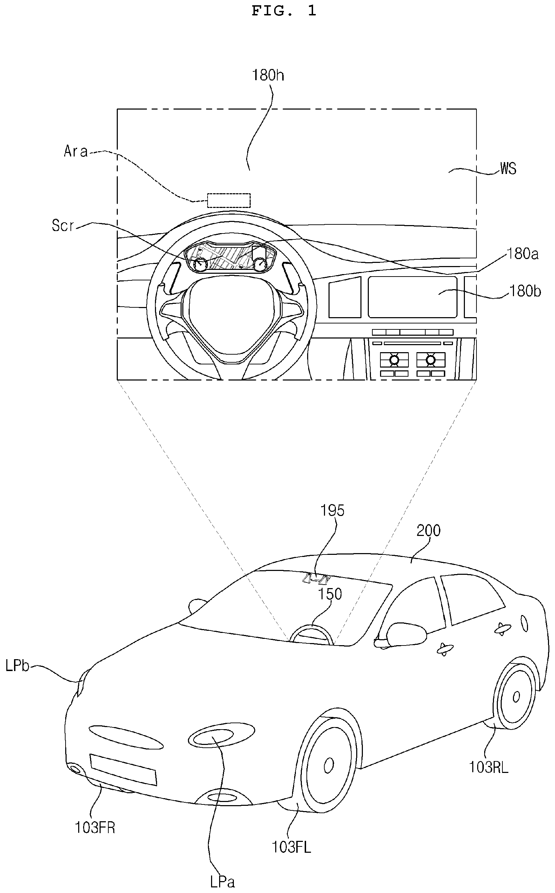

FIG. 1 is a drawing showing an example of the exterior and interior of a vehicle.

Referring to the drawing, a vehicle 200 is operated by a plurality of wheels 103FR, 103FL, 103RL,... that rotate by a power source and a steering wheel 150 for controlling the moving direction of the vehicle 200.

Meanwhile, the vehicle 200 is equipped with a front left lamp LPa and a front right lamp LPb for projecting light to the front of vehicle.

Meanwhile, the vehicle 200 can further include a camera 195 for obtaining images in front of the vehicle.

Meanwhile, the vehicle 200 can include a plurality of displays 180a, 180b, 180h, which display images, information, etc., that are provided therein.

For example, among the plurality of displays 180a, 180b, 180h, a first display 180a can be a cluster display, a second display 180b can be an Audio Video Navigation (AVN) display, and a third display 180h can be a HUD display which is a head up display (HUD) that projects an image onto a certain separated area Ara on a windshield WS.

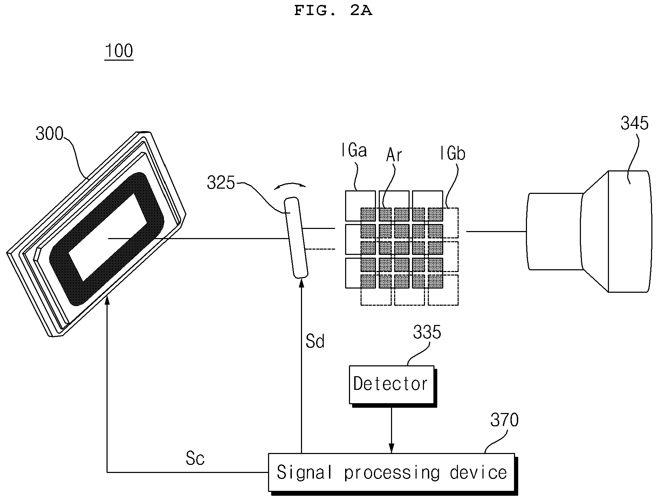

Meanwhile, the projection device for vehicle (100 of FIG. 2A) according to an embodiment of the present disclosure can be applied to a front left lamp LPa, a front right lamp LPb, or a head-up display 180h.

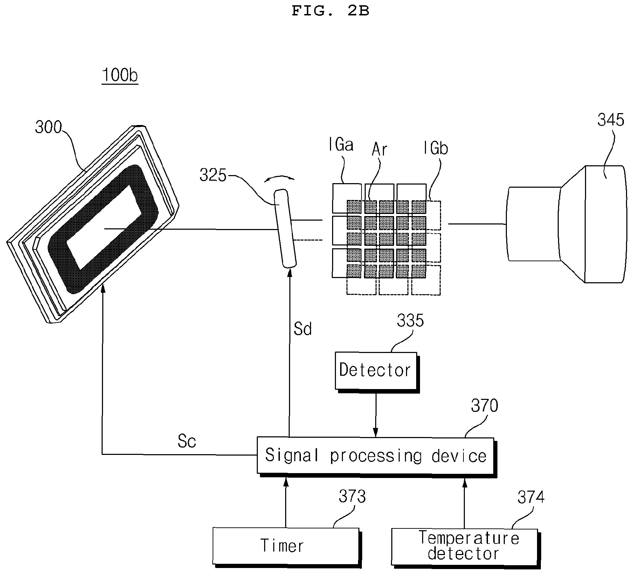

The projection device for vehicle (100 of FIG. 2A) according to an embodiment of the present disclosure includes an image generating device (300 of FIG. 2) corresponding to a pixel shift-based projection device by an actuator, and configured to output a projection image, an actuator (325 of FIG. 2) configured to change the direction of propagation of the projection image from the image generating device 300 and output a partially overlapping projection image, and a signal processing device (370 of FIG. 2) configured to compensate the overlapping area (Ar of FIG. 2) of the projection image by the actuator 325. Accordingly, it is possible to output a clear projection image while increasing the resolution of the projection image.

Meanwhile, the vehicle 200 described in this specification can be a concept that includes all of a vehicle equipped with an engine as a power source, a hybrid vehicle equipped with an engine and an electric motor as power sources, and an electric vehicle equipped with an electric motor as a power source.

FIG. 2A is a diagram illustrating an example of the internal configuration of a projection device for vehicle according to an embodiment of the present disclosure.

Referring to FIG. 2A, a projection device for vehicle 100 according to an embodiment of the present disclosure includes an image generating device 300 configured to output a projection image, an actuator 325 configured to change the direction of propagation of the projection image from the image generating device 300 and output a partially overlapping projection image, and a signal processing device 370 configured to output a compensation image signal Sc for compensating the overlapping area Ara of the projection image by the actuator 325 to the image generating device 300. Accordingly, it is possible to output a clear projection image while increasing the resolution of the projection image.

Meanwhile, the image generating device 300 can include a light source (not shown) and a digital mirror device (not shown) configured to reflect a light output from the light source.

The light source can include an LED diode or a laser diode, etc.

Meanwhile, the digital mirror device can have a plurality of digital mirrors. For example, it can have a digital micromirror device (DMD).

As another example, the image generating device 300 can include a light source (not shown) and a liquid crystal display panel (not shown) configured to output a projection image based on light output from the light source.

For example, the actuator 325 can include a coil (not shown) to which an electric signal is applied and a magnet (not shown).

Specifically, the actuator 325 rotates based on the electric signal applied to the coil, and a pixel-shifted projection image can be output according to the rotation of the actuator 325.

As another example, the actuator 325 can include a MEMS scanner whose rotation angle is adjusted based on an electric signal.

Specifically, a scanner (not shown) within the actuator 325 rotates based on an electric signal applied to the coil, and a pixel-shifted projection image can be output according to the rotation of the scanner (not shown).

The projection device for vehicle 100 according to an embodiment of the present disclosure can output a first projection image IGa based on a first operation of the actuator 325 and a second projection image IGb based on a second operation of the actuator 325.

The second operation can be an operation rotated by a certain angle compared to the first operation.

Meanwhile, the first projection image IGa and the second projection image IGb can have an overlapping area Ar in a pixel unit.

Meanwhile, the projection device for vehicle 100 according to an embodiment of the present disclosure can further include a condensing lens 345 for collecting the first projection image IGa and the second projection image IGb from the actuator 325.

Meanwhile, the projection device for vehicle 100 according to an embodiment of the present disclosure further includes a detector 335 configured to detect the operation of the actuator 325.

Meanwhile, the signal processing device 370 can output a compensation image signal Sc for compensating the overlapping area Ar of the projection image by the actuator 325 to the image generating device 300, based on the operation of the actuator 325.

Meanwhile, the signal processing device 370 can output a reference signal Sd for driving the actuator 325 configured to change in response to the operation of the actuator 325.

Meanwhile, the signal processing device 370 can calculate a resonant frequency based on the operation of the actuator 325, and change the reference signal Sd for driving the actuator 325 based on the calculated resonant frequency. Accordingly, it is possible to output a clear projection image while increasing the resolution of the projection image.

Meanwhile, a projection device for vehicle 100 according to another embodiment of the present disclosure includes an image generating device 300 configured to output a projection image, an actuator 325 configured to change the direction of propagation of the projection image from the image generating device 300 to output a partially overlapping projection image, a detector 335 configured to detect the operation of the actuator 325, and a signal processing device 370 configured to calculate a resonance frequency based on the operation of the actuator 325, and change a reference signal Sd for driving the actuator 325 based on the calculated resonance frequency. Accordingly, it is possible to output a clear projection image while increasing the resolution of the projection image.

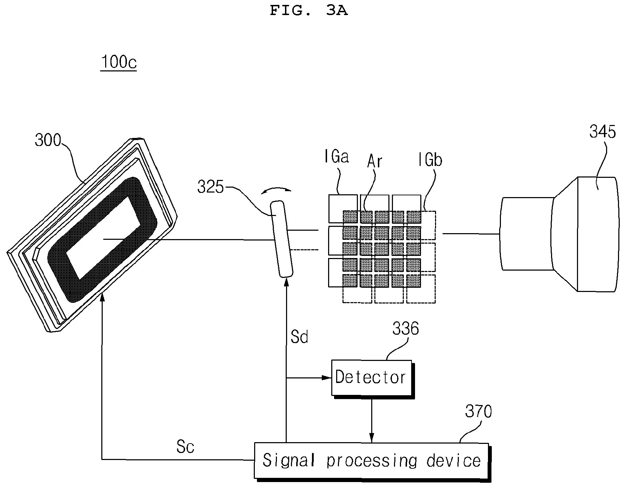

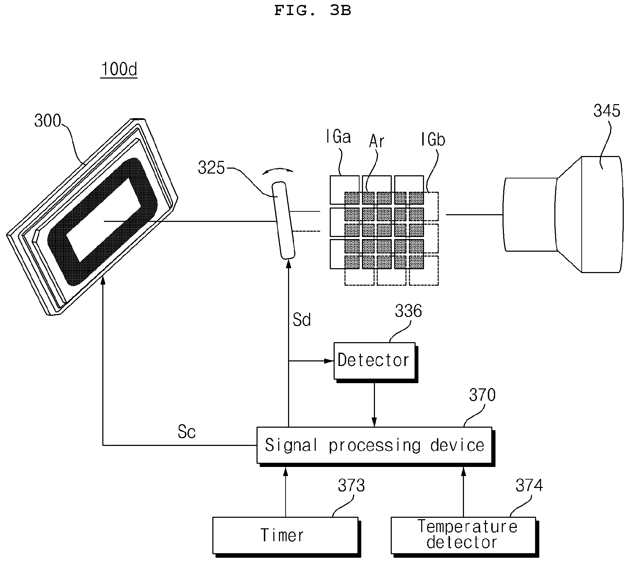

FIGS. 2B to 3B are drawings illustrating the internal configuration of a projection device for vehicle according to various embodiments of the present disclosure.

FIG. 2B is a drawing illustrating the internal configuration of a projection device for vehicle according to another embodiment of the present disclosure.

Referring to FIG. 2B, a projection device for vehicle 100b according to another embodiment of the present disclosure, similar to the projection device for vehicle 100 of FIG. 2A, includes an image generating device 300 configured to output a projection image, an actuator 325 configured to change the direction of propagation of the projection image from the image generating device 300 to output a partially overlapping projection image, a signal processing device 370, and a detector 335 configured to detect the operation of the actuator 325.

Meanwhile, unlike FIG. 2A, the projection device for vehicle 100b according to another embodiment of the present disclosure can further include a temperature detector 374 configured to detect the temperature of the projection device for vehicle 100.

Meanwhile, the signal processing device 370 can calculate a resonant frequency based on the operation of the actuator 325 and the temperature detected by the temperature detector 374, and can change the reference signal Sd for driving the actuator 325 based on the calculated resonant frequency. Accordingly, it is possible to output a clear projection image while increasing the resolution of the projection image in consideration of the detected temperature.

For example, if the temperature detected by the temperature detector 374 exceeds a set temperature range, specifically, if it exceeds a set temperature range, the signal processing device 370 can calculate a second resonant frequency higher than the first resonant frequency corresponding to the set temperature range.

Then, the signal processing device 370 can output a second reference signal Sd based on the calculated second resonant frequency to the actuator 325.

Meanwhile, a projection device for vehicle 100b according to another embodiment of the present disclosure, unlike FIG. 2A, can further include a timer 373 for calculating the operating time of the projection device for vehicle 100.

Meanwhile, the signal processing device 370 can calculate a resonant frequency based on the operation of the actuator 325 and the operating period of the actuator 325 from the timer 373, and can change the reference signal Sd for driving the actuator 325 based on the calculated resonant frequency. Accordingly, it is possible to output a clear projection image while increasing the resolution of the projection image, in consideration of the operating period.

For example, if the operating period of the projection device for vehicle 100b exceeds a set period based on the timer 373, specifically, if it exceeds a set period, the signal processing device 370 can calculate a third resonant frequency higher than the first resonant frequency corresponding to the set period.

In addition, the signal processing device 370 can output a third reference signal Sd based on the calculated third resonant frequency to the actuator 325.

FIG. 2C is a drawing illustrating an example of the internal configuration of a projection device for vehicle according to another embodiment of the present disclosure.

Referring to FIG. 2C, the projection device for vehicle 100c according to another embodiment of the present disclosure includes an image generating device 300 configured to output a projection image, an actuator 325 configured to change the direction of propagation of the projection image from the image generating device 300 to output a partially overlapping projection image, a signal processing device 370 configured to output a compensation image signal Sc for compensating the overlapping area Ara of the projection image by the actuator 325 to the image generating device 300, and a detector 336 configured to detect an operation waveform of the actuator 325. Accordingly, it is possible to output a clear projection image while increasing the resolution of the projection image.

Unlike the detector 335 within the projection device for vehicle 100 of FIG. 2A, the detector 336 within the projection device for vehicle 100c can detect the operation waveform of the actuator 325.

Specifically, the detector 336 can detect a signal waveform applied to the actuator 325.

For example, the detector 336 can detect a reference signal Sd for driving the actuator 325.

Meanwhile, the signal processing device 370 can output a compensation image signal Sc for compensating the overlapping area Ar of the projection image by the actuator 325 to the image generating device 300, based on the operation waveform of the actuator 325.

Meanwhile, the signal processing device 370 can output a reference signal Sd for driving the actuator 325 configured to change in response to the operation waveform of the actuator 325.

Meanwhile, the signal processing device 370 can calculate a resonant frequency based on the operation waveform of the actuator 325, and change the reference signal Sd for driving the actuator 325 based on the calculated resonant frequency. Accordingly, it is possible to output a clear projection image while increasing the resolution of the projection image.

FIG. 2D is a drawing illustrating the internal configuration of a projection device for vehicle according to another embodiment of the present disclosure.

Referring to FIG. 2D, a projection device for vehicle 100d according to another embodiment of the present disclosure, similar to the projection device for vehicle 100c of FIG. 2C, includes an image generating device 300 configured to output a projection image, an actuator 325 configured to change the direction of propagation of the projection image from the image generating device 300 to output a partially overlapping projection image, a signal processing device 370, and a detector 336 configured to detect the operation waveform of the actuator 325.

Meanwhile, unlike FIG. 2C, the projection device for vehicle 100d according to another embodiment of the present disclosure can further include a temperature detector 374 configured to detect the temperature of the projection device for vehicle 100c.

Meanwhile, the signal processing device 370 can calculate the resonance frequency based on the operation waveform of the actuator 325 and the temperature detected by the temperature detector 374, and can change the reference signal Sd for driving the actuator 325 based on the calculated resonance frequency. Accordingly, it is possible to output a clear projection image while increasing the resolution of the projection image, in consideration of the detected temperature.

Meanwhile, unlike FIG. 2C, a projection device for vehicle 100d according to another embodiment of the present disclosure can further include a timer 373 for calculating the operating time of the projection device for vehicle 100c.

Meanwhile, the signal processing device 370 calculates the resonant frequency based on the operation waveform of the actuator 325 and the operating period of the actuator 325 from the timer 373, and can change the reference signal Sd for driving the actuator 325 based on the calculated resonant frequency. Accordingly, it is possible to output a clear projection image while increasing the resolution of the projection image, in consideration of the operating period.

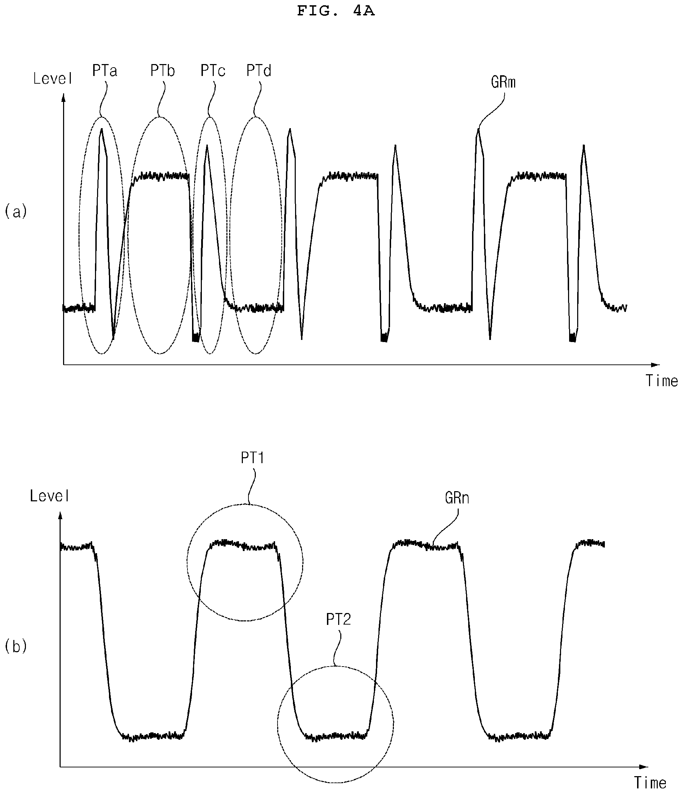

FIGS. 4A to 6B are drawings for explaining FIGS. 2A to 3B.

FIG. 4A is a drawing illustrating a reference signal waveform and an actuator driving waveform.

Referring to FIG. 4A, the signal processing device 370 can output a reference signal waveform GRm for driving the actuator 325.

The reference signal waveform GRm can repeat a first peak section PTa, a first level sustain section PTb, a second peak section PTc having a level lower than the first peak, and a second level sustain section PTd lower than the first level.

Meanwhile, based on the reference signal waveform GRm, the actual actuator driving waveform GRn can be illustrated as shown in FIG. 4A(b).

The actuator driving waveform GRn can repeat a first level sustain section PT1 and a second level sustain section PT2 lower than a first level.

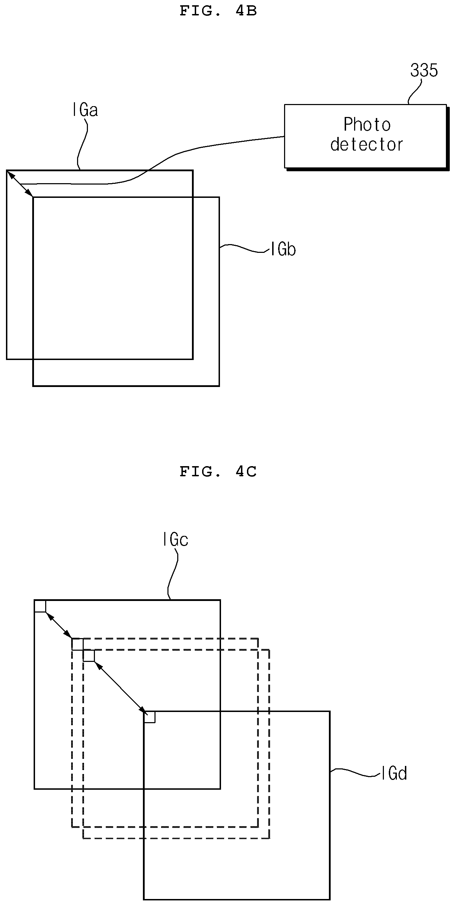

FIG. 4B illustrates examples of a first projection image and a second projection image, based on the reference signal waveform or the actuator driving waveform of FIG. 4A.

Referring to FIG. 4B, the projection device for vehicle 100 according to an embodiment of the present disclosure can output a first projection image IGa based on a first operation of the actuator 325 and a second projection image IGb based on a second operation of the actuator 325.

Meanwhile, the first projection image IGa and the second projection image IGb can have an overlapping area Ar in a pixel unit.

Meanwhile, the detector 335, e.g., a photo detector, can detect the first projection image IGa and the second projection image IGb.

Alternatively, the detector 335, e.g., a photo detector, can detect the first and second operations of the actuator 325.

FIG. 4C illustrates an example of multiple projection images, based on the reference signal waveform or actuator driving waveform of FIG. 4A.

Referring to FIG. 4C, the projection device for vehicle 100 according to an embodiment of the present disclosure can output a first projection image IGc, a second projection image based on a first operation of the actuator 325 based on the first projection image IGc, a third projection image IGd, and a fourth projection image based on a second operation of the actuator 325 based on the third projection image IGd.

Meanwhile, the first to fourth projection images can have an overlapping area Ar in a pixel unit.

Meanwhile, the detector 335, e.g., a photodetector, can detect the first to fourth projection images.

Alternatively, the detector 335, e.g., a photo detector, can detect the first and second operations of the actuator 325.

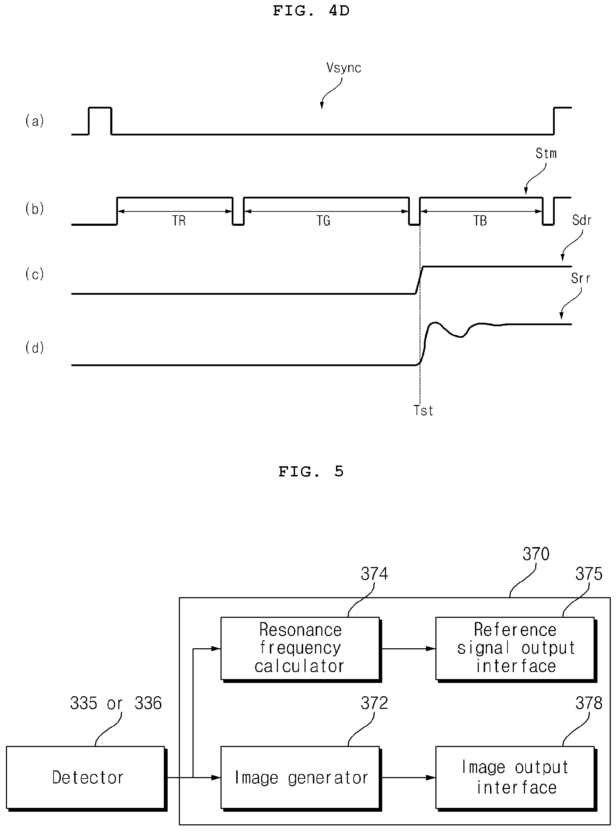

FIG. 4D is a drawing illustrating the operation of an actuator based on a vertical synchronization signal.

Referring to FIG. 4D, the signal processing device 370 can output a projection image, based on the vertical synchronization signal Vsync.

For example, the signal processing device 370 can sequentially output projection images of a plurality of colors R, G, B, based on the vertical synchronization signal Vsync.

FIG. 4D illustrates that a red projection image is output during a TR period within the vertical synchronization signal Vsync, a green projection image is output during a TG period, and a blue projection image is output during a TB period.

Meanwhile, when sequentially outputting a plurality of colors projection images, based on the vertical synchronization signal, the signal processing device 370 can control the actuator 325 to operate in response to a single color projection image among projection images of the plurality of colors.

For example, the signal processing device 370 can control the actuator 325 to operate in response to a blue projection image among the projection images of the plurality of colors.

FIG. 4D(a) illustrates a reference signal waveform Sdr for the operation of the actuator 325 in response to the blue projection image.

As shown in FIG. 4D(a), at time Tst, the reference signal waveform Sdr can increase from a low level to a high level, thereby causing the actuator 325 to operate at time Tst.

For example, the actuator 325 can perform a first operation before time Tst, and then perform a second operation of partially rotating at time Tst.

Accordingly, an overlapping image corresponding to a blue projection image among the projection images of the plurality of colors can be generated.

Meanwhile, based on the operation of the actuator 325, the signal processing device 370 can output a compensation image signal Sc for compensating the overlapping area Ar of a single-color projection image generated by the actuator 325 to the image generating device 300.

Meanwhile, unlike the drawing, the signal processing device 370 can also control to simultaneously output the projection images of a plurality of colors, based on a vertical synchronization signal.

Meanwhile, when the projection images of a plurality of colors are simultaneously output, based on a vertical synchronization signal, the signal processing device 370 can control the actuator 325 to operate in response to the projection images of a plurality of colors. Accordingly, it is possible to output a clear projection image while increasing the resolution of the projection image.

FIG. 5 is an example of an internal block diagram of the signal processing device of FIGS. 2A to 3B.

Referring to FIG. 5, the signal processing device 370 can include an image generator 372, an image output interface 378, a resonance frequency calculator 374, and a reference signal output interface 375 that receive operation information or operation waveform information of the actuator 325 from the detector 335 or 336, and operate based on the operation information or operation waveform information of the actuator 325.

Meanwhile, the image generator 372 can generate a compensation image signal Sc for compensating the overlapping area Ar of the projection image by the actuator 325, based on the operation information or operation waveform information of the actuator 325, from the detector 335 or 336.

The image output interface 378 can output the compensation image signal Sc to the image generating device 300.

Meanwhile, the resonance frequency calculator 374 can calculate the resonance frequency based on the operation information or operation waveform information of the actuator 325, from the detector 335 or 336.

Meanwhile, the resonance frequency calculator 374 can calculate a resonance frequency based on the operation of the actuator 325 and the temperature detected by the temperature detector 374.

Meanwhile, the resonance frequency calculator 374 can calculate a resonance frequency based on the operation of the actuator 325 and the operating period of the actuator 325 from the timer 373.

Meanwhile, the reference signal output interface 375 can output a variable reference signal Sd for driving the actuator 325 based on the calculated resonance frequency.

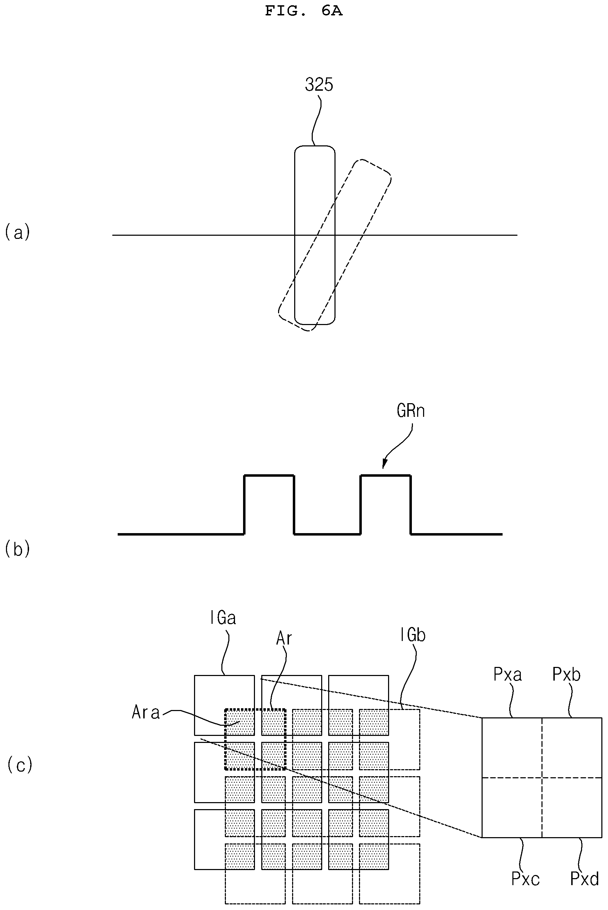

FIG. 6A illustrates an example of overlapping projection images based on the operation of the actuator 325.

Referring to FIG. 6A, the signal processing device 370 can control the actuator 325 to perform a first operation and a second operation.

Therefore, as shown in FIG. 6A(a), the actuator 325 operates in a first operation mode and a second operation mode in which it rotates partially.

Meanwhile, the first and second operation modes of the actuator 325 are operated by the reference signal GRn of FIG. 6A(b).

FIG. 6A(c) illustrates a first projection image IGa based on the first operation of the actuator 325 and a second projection image IGb based on the second operation of the actuator 325.

The first projection image IGa and the second projection image IGb can overlap in a partial area Ar.

Meanwhile, the signal processing device 370 can calculate a compensation luminance value of a first pixel Pxa based on the luminance value of the first pixel Pxa within the overlapping area Ar of the second projection image IGb by the actuator 325 and the luminance value of a second pixel Pxd adjacent to the first pixel Pxa, and output a compensation image signal Sc based on the compensation luminance value of the first pixel Pxa to the image generating device 300. Accordingly, it is possible to output a clear projection image while increasing the resolution of the projection image.

In the drawing, since the second projection image IGb that is diagonally shifted from the first projection image IGa is output, the second pixel Pxd adjacent to the first pixel Pxa can be a pixel adjacent to the diagonal direction of the first pixel Pxa.

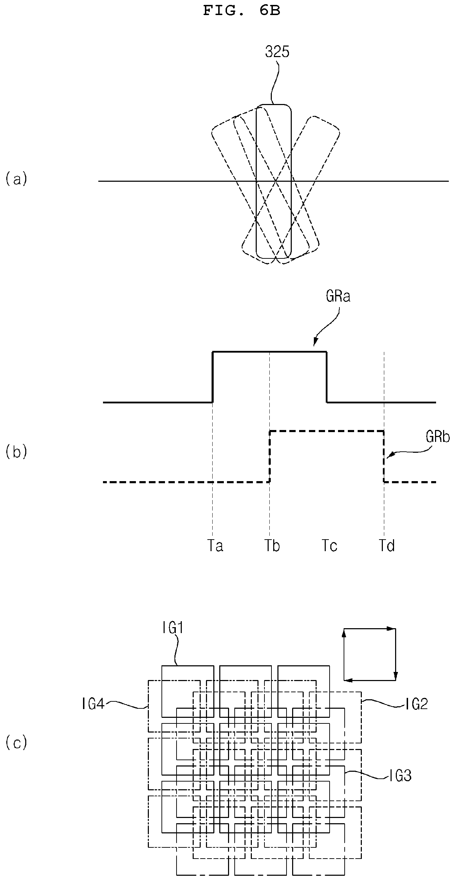

FIG. 6B illustrates an example of overlapping projection images based on the operation of the actuator 325.

Referring to FIG. 6B, the signal processing device 370 can control the actuator 325 to perform the first to fourth operations.

Accordingly, as shown in FIG. 6B(a), the actuator 325 operates in the first to fourth operation modes by rotation.

Meanwhile, the first to fourth operation modes of the actuator 325 can be operated by the reference signals GRa and GRb of FIG. 6B(b).

For example, the pixel movement in a first direction can be performed by a first reference signal GRa, and the pixel movement in a second direction different from the first direction can be performed by a second reference signal GRb.

FIG. 6B(c) illustrates a first projection image IG1 based on a first operation of the actuator 325, a second projection image IG2 moving in a first direction, a third projection image IG3 moving in a second direction, and a fourth projection image IG4 moving in a third direction.

Meanwhile, when the fourth projection image IG4 moves in the third direction, the first projection image IG1 can be output again.

Here, the first direction can be the right direction, the second direction can be the down direction, the third direction can be the left direction, and the fourth direction can be the up direction.

Meanwhile, the signal processing device 370 can calculate a compensation luminance value of the first pixel based on the luminance value of the first pixel within the overlapping area of the plurality of projection images IG1 to IG4 by the actuator 325 and the luminance value of the second pixel adjacent to the first pixel, and output a compensation image signal based on the compensation luminance value of the first pixel to the image generating device 300. Accordingly, it is possible to output a clear projection image while increasing the resolution of the projection image.

Meanwhile, although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical spirit or scope of the present disclosure.

## Claims

1. A projection device for vehicle comprising:
an image generating device configured to output a projection image;
an actuator configured to change a direction of propagation of the projection image from the image generating device and output a partially overlapping projection image; and
a signal processing device configured to output a compensation image signal for compensating an overlapping area of the projection image by the actuator to the image generating device.

2. The projection device for vehicle of claim 1, further comprising a detector configured to detect an operation of the actuator,
wherein the signal processing device is configured to output, to the image generating device, the compensation image signal for compensating an overlapping area of the projection image by the actuator based on the operation of the actuator.

3. The projection device for vehicle of claim 1, wherein the signal processing device is configured to output a reference signal for driving the actuator changed in response to the operation of the actuator.

4. The projection device for vehicle of claim 1, further comprising a detector configured to detect an operation of the actuator,
wherein the signal processing device is configured to calculate a resonant frequency based on the operation of the actuator, and change a reference signal for driving the actuator based on the calculated resonant frequency.

5. The projection device for vehicle of claim 4, further comprising a temperature detector,
wherein the signal processing device is configured to calculate the resonant frequency based on the operation of the actuator and a temperature detected by the temperature detector, and change the reference signal for driving the actuator based on the calculated resonant frequency.

6. The projection device for vehicle of claim 4, further comprising a timer,
wherein the signal processing device is configured to calculate the resonant frequency based on the operation of the actuator and an operating period of the actuator from the timer, and change the reference signal for driving the actuator based on the calculated resonant frequency.

7. The projection device for vehicle of claim 1, wherein while sequentially outputting projection images of a plurality of colors based on a vertical synchronization signal, the signal processing device is configured to control the actuator to operate in response to a projection image of any one color among the projection images of a plurality of colors.

8. The projection device for vehicle of claim 7, further comprising a detector configured to detect the operation of the actuator,
wherein, based on the operation of the actuator, the signal processing device is configured to output, to the image generating device, a compensation image signal for compensating an overlapping area of a projection image of any one color by the actuator.

9. The projection device for vehicle of claim 1, wherein while simultaneously outputting projection images of a plurality of colors based on a vertical synchronization signal, the signal processing device is configured to control the actuator to operate in response to the projection images of a plurality of colors.

10. The projection device for vehicle of claim 9, further comprising a detector configured to detect the operation of the actuator,
wherein, based on the operation of the actuator, the signal processing device is configured to output, to the image generating device, a compensation image signal for compensating an overlapping area of the projection image by the actuator.

11. The projection device for vehicle of claim 1, wherein the signal processing device is configured to calculate a compensation luminance value of the first pixel based on a luminance value of a first pixel within the overlapping area of the projection image by the actuator and a luminance value of a second pixel adjacent to the first pixel, and output a compensation image signal based on the compensation luminance value of the first pixel to the image generating device.

12. The projection device for vehicle of claim 1, wherein as a movement amount of the actuator increases, while compensating a pixel within the overlapping area of the projection image by the actuator, the signal processing device is configured to increase the number of adjacent pixels, and output a luminance value of increased adjacent pixels and a compensation image signal based on a luminance value of pixel to the image generating device.

13. A projection device for vehicle comprising:
an image generating device configured to output a projection image;
an actuator configured to change a direction of propagation of the projection image from the image generating device and output a partially overlapping projection image;
a detector configured to detect an operation of the actuator; and
a signal processing device configured to calculate a resonant frequency based on the operation of the actuator, and change a reference signal for driving the actuator, based on the calculated resonant frequency.

14. The projection device for vehicle of claim 13, wherein the signal processing device is configured to output, to the image generating device, a compensation image signal for compensating an overlapping area of the projection image by the actuator based on the operation of the actuator.
